(19) Europäisches Patentamt / European Patent Office / Office européen des brevets

(11) **EP 4 078 755 B1**

(12) **FASCICULE DE BREVET EUROPEEN**

(45) Date de publication et mention
de la délivrance du brevet:
**13.12.2023 Bulletin 2023/50**

(21) Numéro de dépôt: **20820149.1**

(22) Date de dépôt: **09.12.2020**

(51) Classification Internationale des Brevets (IPC):
*H02H 7/12* *(2006.01)*     *H02H 3/20* *(2006.01)*
*H02M 3/158* *(2006.01)*     *H02M 7/483* *(2007.01)*

(52) Classification Coopérative des Brevets (CPC):
**H02H 7/1213; H02M 3/1584;** H02H 3/202;
H02M 7/4835; Y02E 60/60

(86) Numéro de dépôt international:
**PCT/EP2020/085188**

(87) Numéro de publication internationale:
**WO 2021/122187 (24.06.2021 Gazette 2021/25)**

(54) **CONVERTISSEUR DE TENSION DC/DC MUNI D'UN DISPOSITIF COUPE-CIRCUIT**

GLEICHSPANNUNGSWANDLER MIT EINEM SCHUTZSCHALTER

DC/DC VOLTAGE CONVERTER PROVIDED WITH A CIRCUIT-BREAKER DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2019 FR 1915048**

(43) Date de publication de la demande:
**26.10.2022 Bulletin 2022/43**

(73) Titulaires:
• **Supergrid Institute
69100 Villeurbanne (FR)**
• **Université Grenoble Alpes
38400 Saint-Martin-d'Hères (FR)**

(72) Inventeurs:
• **PAEZ ALVAREZ, Juan David
69100 VILLEURBANNE (FR)**
• **MANEIRO, Jose
65360 ALLIER (FR)**
• **DWORAKOWSKI, Piotr
69510 DECINES (FR)**
• **BACHA, Seddik
38320 EYBENS (FR)**
• **FREY, David
38400 SAINT MARTIN D'HERES (FR)**
• **MOREL, Florent
01000 BOURG EN BRESSE (FR)**

(74) Mandataire: **Cabinet Beau de Loménie
Immeuble Eurocentre
179 Boulevard de Turin
59777 Lille (FR)**

(56) Documents cités:
WO-A1-2014/169388     CN-A- 108 233 340
CN-A- 109 713 898

**Description**

**Domaine Technique**

La présente invention concerne le domaine technique des convertisseurs de tension permettant de convertir une première tension continue en une seconde tension continue et inversement. Ces convertisseurs sont également appelés convertisseurs de tension DC/DC. Ce type de convertisseurs est particulièrement adapté pour être implanté dans des installations de transport d'énergie électrique en courant continu haute tension (HVDC pour « High Voltage Direct Current » en langue anglaise).

Les convertisseurs de tension DC/DC permettent la connexion d'un premier réseau d'alimentation électrique continu et d'un second réseau d'alimentation électrique continu.

**Technique antérieure**

On connait un type de convertisseur de tension selon la technique antérieure permettant de convertir une première tension continue en une seconde tension continue et inversement. Ce convertisseur comporte :

- des premier et second terminaux continus configurés pour être reliés électriquement à un premier réseau d'alimentation électrique continu ;
- des troisième et quatrième terminaux continus configurés pour être reliés électriquement à un second réseau d'alimentation électrique continu ;
- une pluralité de bras connectés entre le premier terminal continu et le deuxième terminal continu, les bras comportant chacun un demi-bras supérieur et un demi-bras supérieur comprenant une chaine de sous-modules comportant une pluralité de sous-modules commandables individuellement par un organe de commande propre à chaque sous-module. Chaque sous-module comporte un condensateur.

L'organe de commande de chaque sous-module permet d'insérer ou de contourner le condensateur de chaque sous-module dans les chaines de sous-modules. Aussi, le nombre de sous-modules insérés dans chaque chaine de sous-modules peut être contrôlé et chaque chaine de sous-modules se comporte comme une source de tension contrôlable. Chacune des chaines de sous-modules permet de générer une tension contrôlable insérée dans le bras. Ladite tension insérée présente une composante continue et une composante alternative.

En fonctionnement normal de ce convertisseur selon la technique antérieure, connecté entre un premier réseau d'alimentation électrique continu et un second réseau d'alimentation électrique continu, la tension nominale $v_{Nsup}$ générée par chacune des chaines de sous-modules des demi-bras supérieurs est égale en première approximation à :

$$v_{Nsup} \approx V_{DC1} - V_{DC2} + V_{ACsup}$$

Où $V_{DC1}$ est la tension nominale du premier réseau d'alimentation électrique continu, $V_{DC2}$ est la tension nominale du second réseau d'alimentation électrique continu, $V_{ACsup}$ est la composante alternative de la tension générée par la chaine de sous-modules du demi-bras supérieur.

La tension nominale $v_{Ninf}$ générée par chacune des chaines de sous-modules des demi-bras inférieurs est égale en première approximation à :

$$v_{Ninf} \approx V_{DC2} + V_{ACinf}$$

Où $V_{ACinf}$ est la composante alternative de la tension générée par la chaine de sous-modules du demi-bras inférieur.

Ce convertisseur présente un rapport de transformation $n_{DC}$ égal à :

$$n_{DC} = V_{DC1} / V_{DC2}$$

Dans le cas où les demi-bras supérieurs et inférieurs ne comprennent que des sous-modules de topologie en demi-pont, lesdites tensions nominales $v_{Nsup}$ et $V_{Ninf}$ générées par les chaines de sous-modules respectivement des demi-bras supérieurs et inférieurs doivent être strictement positives.

Aussi, pour un rapport de transformation $n_{DC}$ strictement inférieur à 2 ($n_{DC}<2$), l'amplitude de la composante alternative de la tension générée par les chaines de sous-modules des demi-bras supérieurs doit être inférieure ou égale à ($V_{DC1}-V_{DC2}$).

En conséquence, le nombre de sous-modules $N_{SMsup}$ minimal dans chacune des chaines de sous-modules des demi-bras supérieur, pour un rapport de transformation $n_{DC}$ strictement inférieur à 2, afin de pouvoir générer la tension nominale $v_{Nsup}$ est égale en première approximation à :

$$N_{SMsup} \approx \frac{2*(V_{DC1}-V_{DC2})}{V_{SM}}$$

Où $V_{SM}$ est la tension aux bornes d'un sous-module lorsque le condensateur dudit sous-module est inséré.

En cas de panne sur le second réseau d'alimentation électrique continu, la tension de ce second réseau d'alimentation électrique continu devient nulle. Aussi, chacune des chaines de sous-modules des demi-bras supérieurs doit alors être capable de supporter une tension de défaut $v_{defsup}$ égale à :

$$v_{defsup} = V_{DC1}$$

Cette tension de défaut $v_{defsup}$ est très supérieure à la tension nominale $v_{Nsup}$ générée par chacune des chaines de sous-modules des demi-bras supérieurs en fonctionnement normal du convertisseur. Par conséquent, dans le cas où les chaines de sous-modules des demi-bras supérieurs ne sont pas dimensionnées en fonction de ces situations de pannes, le nombre de sous-modules dans les chaines de sous-modules des demi-bras supérieurs est insuffisant pour supporter la tension de défaut $v_{defsup}$. En cas de panne sur le second réseau d'alimentation électrique continu, les demi-bras supérieurs risquent alors d'être soumis à des surtensions pouvant endommager le convertisseur et compromettre son bon fonctionnement.

Afin de protéger le convertisseur contre de telles surtensions, causées notamment par un défaut sur le second réseau d'alimentation électrique continu, il est connu de sur-dimensionner les chaines de sous-modules des demi-bras supérieurs en ajoutant un nombre important de sous-modules dans les chaines de sous-modules des demi-bras supérieurs. Ces sous-modules permettent de supporter une tension suffisante pendant le défaut pour protéger le convertisseur. Toutefois, ces sous-modules, ajoutés afin de supporter des surtensions, se révèlent inutiles en fonctionnement normal du convertisseur.

En conséquence, ces convertisseurs selon l'art antérieur sont particulièrement lourds, encombrants et coûteux.

Convertisseurs de tension avec une protection intégrée sont divulgués par CN 108 233340 A, CN 109 713898 A, WO 2014/169388 A1.

Par ailleurs, la présence d'un nombre important de sous-modules augmente les pertes par conductions et en commutation.

De plus, d'importantes ressources doivent être utilisées afin de contrôler l'ensemble des éléments de commande de ce convertisseur. Le contrôle du convertisseur est donc également coûteux et complexe.

**Exposé de l'invention**

Un but de la présente invention, telle que définie par les revendications principales 1 et 14, est de proposer un convertisseur de tension remédiant aux problèmes précités.

Pour ce faire, l'invention porte sur un convertisseur de tension permettant de convertir une première tension continue en une seconde tension continue et inversement, le convertisseur comportant :

- des premier et second terminaux continus configurés pour être reliés électriquement à un premier réseau d'alimentation électrique continu ;
- des troisième et quatrième terminaux continus configurés pour être reliés électriquement à un second réseau d'alimentation électrique continu;
- au moins un bras s'étendant entre le premier terminal continu et le deuxième terminal continu, ledit au moins un bras comportant au moins un demi-bras supérieur et un demi-bras inférieur reliés électriquement l'un à l'autre en un point milieu, chaque demi-bras comprenant une chaine de sous-modules comportant une pluralité de sous-modules commandables individuellement par un organe de commande propre à chaque sous-module et chaque sous-module comprenant un condensateur, l'organe de commande de chaque sous-module pouvant prendre au moins un premier état dans lequel le condensateur est inséré dans la chaine de sous-modules et un deuxième état dans lequel le condensateur n'est pas inséré dans ladite chaine de sous-modules, chaque chaine de sous-modules pouvant être modélisée par une source de tension apte à générer une tension à ses bornes dépendant d'un nombre de condensateurs mis en série dans ladite chaine de sous-modules, chaque demi-bras comprenant une inductance connectée en série avec la chaine de sous-modules dudit demi-bras ;
- un module de filtrage reliant électriquement ledit point milieu dudit au moins un bras au troisième terminal continu, ledit module de filtrage étant configuré pour limiter la circulation d'un courant électrique alternatif vers ledit troisième terminal continu ; et
- au moins un dispositif coupe-circuit connecté entre le point milieu dudit au moins un bras et le premier terminal continu, ledit dispositif coupe-circuit pouvant prendre une position ouverte et une position fermée, ledit dispositif coupe-circuit étant configuré pour s'ouvrir lorsque la tension aux bornes du demi-bras supérieur dudit au moins un bras atteint la tension maximale pouvant être générée par la chaine de sous-modules dudit demi-bras supérieur.

Le convertisseur de tension selon l'invention peut être aisément connecté dans une installation électrique HVDC, entre un premier réseau d'alimentation électrique continu et un second réseau d'alimentation électrique continu. Le convertisseur selon l'invention forme un convertisseur haute tension DC/DC. Le convertisseur DC/DC selon l'invention est en outre réversible. Par haute tension, on entend de préférence une tension supérieure à 1000 volts.

De préférence, les deuxième et quatrième terminaux sont avantageusement reliés électriquement entre eux, par exemple par une ligne de masse.

Le demi-bras supérieur dudit au moins un bras présente deux bornes entre lesquelles il s'étend. Le demi-bras supérieur dudit au moins un bras s'étend avantageusement entre ledit point milieu et un point supérieur du demi-bras, qui forment alors les bornes du demi-bras supérieur. Avantageusement, des composants électriques peuvent être connectés entre le premier terminal et le point supérieur du demi-bras supérieur dudit au moins un bras. En variante et de manière non limitative, le bras peut être relié directement au premier terminal, de sorte que le premier terminal et le point supérieur du demi-bras supérieur dudit au moins un bras présentent un même potentiel électrique.

Sans sortir du cadre de l'invention, le convertisseur peut comprendre plusieurs bras connectés en parallèle les uns des autres, s'étendant entre les premier et deuxième terminaux continus.

De manière non limitative, les sous-modules peuvent avoir une topologie en demi-pont (« Half-bridge » en langue anglaise) ou en pont complet (« Full-bridge » en langue anglaise).

On comprend que le dispositif coupe circuit est connecté sur un chemin de courant passant par le premier terminal continu et le point milieu dudit au moins un bras, ce chemin de courant passant par ledit au moins un bras.

De manière non limitative, le dispositif coupe-circuit peut par exemple être connecté entre la chaine de sous-modules du demi-bras supérieur et ledit point supérieur du demi-bras ou encore entre ledit point supérieur et le premier terminal continu.

Dans la position ouverte, le dispositif coupe-circuit est configuré pour interrompre la circulation d'un courant dans le demi-bras supérieur. Dans la position fermée, il autorise la circulation d'un tel courant dans le demi-bras supérieur. Le dispositif coupe-circuit est avantageusement placé en position fermée lors du fonctionnement normal du convertisseur. La position ouverte du dispositif coupe-circuit correspond de préférence à une position de protection ou de sécurité, permettant de protéger le convertisseur contre une surtension.

Le module de filtrage permet de limiter la valeur du courant alternatif circulant vers le troisième terminal continu, et encore de préférence d'empêcher la circulation d'un courant alternatif vers le troisième terminal continu. Un intérêt est de protéger un second réseau d'alimentation électrique continu connecté entre les troisième et quatrième terminaux continus du convertisseur en garantissant la circulation d'un unique courant continu vers le troisième terminal continu.

Avantageusement, la chaîne de sous-modules du demi-bras supérieur dudit au moins un bras comprend un nombre de sous-modules suffisant pour générer une tension nominale $v_{Nsup}$ permettant un fonctionnement normal du convertisseur, hors panne, lorsque ce dernier est connecté entre un premier réseau d'alimentation électrique continu et un second réseau d'alimentation électrique continu.

De préférence, le nombre de sous-modules dans la chaine de sous-modules du demi-bras supérieur est suffisant pour générer une tension nominale $v_{Nsup}$ égale en première approximation à :

$$v_{Nsup} \approx V_{DC1} - V_{DC2} + V_{ACsup}$$

Où VDC1 est la tension nominale du premier réseau d'alimentation électrique continu, VDC2 est la tension nominale du second réseau d'alimentation électrique continu, VACsup est la composante alternative de la tension générée par la chaine de sous-modules du demi-bras supérieur dudit au moins un bras.

De préférence, pour un demi-bras supérieur comportant uniquement des sous-modules de type demi-pont, le nombre de sous-modules NSMsup dans la chaine de sous-modules du demi-bras supérieur dudit au moins un bras est égal en première approximation à :

$$N_{SMsup} = \frac{2*(V_{DC1}-V_{DC2})}{V_{SM}}$$

Où VSM est la tension aux bornes d'un sous-module lorsque le condensateur dudit sous-module est inséré.

Le dispositif coupe-circuit est configuré pour s'ouvrir en cas de surtension dans le demi-bras supérieur, par exemple suite à une panne impliquant une chute de tension entre les troisième et quatrième terminaux continus. De manière non-limitative, l'ouverture du dispositif coupe-circuit peut se faire ou non à courant nul. De manière non-limitative, le dispositif coupe-circuit peut comprendre un élément d'écrêtage ou d'absorption d'énergie pour prévenir une surtension en cas d'ouverture dudit dispositif coupe-circuit à courant non-nul.

Par tension maximale pouvant être générée par la chaine de sous-modules du demi-bras supérieur on entend la tension aux bornes de la chaine de sous-modules lorsque tous les condensateurs de ses sous-modules sont insérés dans le demi-bras supérieur. Cette tension est supérieure ou égale à la tension nominale $v_{Nsup}$. Cette tension est avantageusement inférieure à la tension nominale $V_{DC1}$ du premier réseau d'alimentation électrique continu. Le dispositif coupe-circuit est de préférence configuré pour s'ouvrir lorsque la tension aux bornes du demi-bras supérieur dudit au moins un bras devient supérieure ou égale à ladite tension maximale pouvant être générée par la chaine de sous-modules.

Le dispositif coupe-circuit est apte à supporter entre ses bornes une tension importante, et notamment une tension supérieure ou égale à la différence entre la tension nominale $V_{DC1}$ du premier réseau d'alimentation électrique continu et la tension maximale pouvant être générée par les sous-modules de la chaine de sous-modules du demi-bras supérieur et encore de préférence une tension supérieure ou égale à la tension nominale $V_{DC1}$ du premier réseau d'alimentation électrique. continu. Le dispositif coupe-circuit permet de protéger les sous-modules du demi-bras supérieur et donc le convertisseur contre une telle surtension, afin d'éviter que le convertisseur et ses composants ne soient endommagés. L'ouverture dudit au moins un dispositif coupe-circuit assure donc la protection du convertisseur contre une surtension dans le demi-bras supérieur dudit au moins un bras.

Le dispositif coupe-circuit permet de limiter le nombre de sous-modules dans la chaine de sous-modules du demi-bras supérieur dudit au moins un bras à un nombre de sous-modules environ égal ou légèrement supérieur au nombre de sous-modules $N_{SMsup}$ permettant de générer la tension nominale $v_{Nsup}$, correspondant au fonctionnement normal du convertisseur.

En d'autres mots, l'utilisation du dispositif coupe-circuit permet de limiter le nombre de sous-modules dans la chaine de sous-modules du demi-bras supérieur pour assurer le fonctionnement normal du convertisseur.

Un intérêt du dispositif coupe-circuit est donc d'éviter l'ajout de sous-modules et donc le sur-dimensionnement de la chaine de sous-modules du demi-bras supérieur pour la protection du convertisseur. Ceci permet de réduire l'encombrement, le poids et le coût du convertisseur.

L'utilisation d'un tel dispositif coupe-circuit n'apparait pas évidente dans la mesure où de tels dispositifs coupe-circuit s'ouvrent généralement en cas de surcourant et non en cas de surtension.

En outre, l'utilisation du dispositif coupe-circuit permet de réduire les pertes en conduction et en commutation par rapport aux dispositifs de l'art antérieur présentant un nombre de sous-modules beaucoup plus élevé.

Avantageusement, la tension maximale pouvant être générée par ladite chaine de sous-modules du demi-bras supérieur dudit au moins un bras est inférieure à la tension entre les premier et deuxième terminaux continus lorsque lesdits premier et deuxième terminaux continus sont connectés à un premier réseau d'alimentation électrique continu.

En effet, en cas de panne sur un second réseau d'alimentation électrique continu auquel est connecté le convertisseur, et plus précisément en cas de tension sensiblement nulle entre les troisième et quatrième terminaux continus, la tension de de défaut $v_{defsup}$ du demi-bras supérieur devient sensiblement égale à la tension du premier réseau d'alimentation électrique continu $V_{DC1}$.

Cette tension de défaut $v_{defsup}$ est très supérieure à la tension nominale $v_{Nsup}$ générée par la chaine de sous-modules du demi-bras supérieur en fonctionnement normal du convertisseur.

De préférence, ledit au moins un dispositif coupe-circuit est connecté entre le premier terminal continu et la chaine de sous-modules du demi-bras supérieur dudit au moins un bras. Le dispositif coupe-circuit est donc connecté entre un sous-module supérieur de ladite chaine de sous-modules et le premier terminal continu, par exemple entre ce sous-module supérieur et le point supérieur du demi-bras supérieur ou entre ledit point supérieur et le premier terminal continu.

De manière avantageuse, le convertisseur comprend une pluralité de bras connectés entre le premier terminal continu et le deuxième terminal continu, chaque bras comportant un demi-bras supérieur et un demi-bras inférieur reliés l'un à l'autre en un point milieu, chaque demi-bras comprenant une chaine de sous-modules et une inductance connectée en série avec la chaine de sous-modules dudit demi-bras. Lesdits bras sont connectés en parallèle les uns des autres. Les tensions aux bornes des chaines de sous-modules des demi-bras supérieurs sont sensiblement égales en amplitude. L'utilisation d'une pluralité de bras permet d'empêcher plus efficacement la circulation d'un courant alternatif vers les terminaux continus du convertisseur. Cela permet en outre d'augmenter la puissance du convertisseur. Avantageusement, les composantes alternatives des courants circulant dans les bras sont déphasées l'unes par rapport à l'autre tandis que leurs sommes est nulles. De préférence, les composantes alternatives des tensions aux bornes de chacun des bras sont également déphasées l'une par rapport à l'autre.

Selon une première variante préférentielle, l'ensemble des demi-bras supérieurs sont connectés électriquement entre eux en un point supérieur et ledit au moins un dispositif coupe-circuit est connecté entre ledit point supérieur et le premier terminal continu. Aussi, l'ouverture du dispositif coupe-circuit interrompt simultanément la circulation du courant dans l'ensemble des demi-bras supérieurs.

Un intérêt est de pouvoir protéger l'ensemble des sous-modules des demi-bras supérieurs en commandant l'ouverture d'un unique dispositif coupe-circuit. Le convertisseur est donc protégé plus rapidement et plus efficacement. En outre, le dispositif coupe-circuit n'est traversé que par un courant continu. Ceci permet de limiter les pertes en conduction, par rapport à un dispositif coupe-circuit traversé par un courant continu et par courant alternatif.

Dans cette variante non limitative, le dispositif coupe-circuit est avantageusement configuré pour s'ouvrir lorsque la tension aux bornes d'au moins un des demi-bras supérieurs atteint et de préférence devient supérieure ou égale à la tension maximale pouvant être générée par la chaine de sous-modules dudit demi-bras supérieur.

Selon une deuxième variante préférentielle, l'ensemble des demi-bras supérieurs sont connectés entre eux en un point supérieur et ledit au moins un dispositif coupe-circuit est connecté en série dans le demi-bras supérieur d'un des bras, entre ledit point supérieur et le point milieu dudit bras. Dans cette variante, ledit au moins un dispositif coupe-circuit est connecté en série uniquement avec la chaine de sous-modules du demi-bras dans lequel il est connecté. Aussi, l'ouverture du dispositif coupe-circuit interrompt la circulation du courant dans ce demi-bras supérieurs uniquement.

De préférence, le convertisseur comprend une pluralité de dispositifs coupe-circuits, chacun des dispositifs coupe-circuits étant connecté en série dans un demi-bras supérieur d'un des bras du convertisseur entre ledit point supérieur et le point milieu du bras correspondant. Les dispositifs coupe-circuits peuvent avantageusement être commandés et donc être placés en position ouverte ou en position fermée indépendamment les uns des autres. Un intérêt est de permettre d'interrompre la circulation d'un courant dans un demi-bras supérieur sélectionné et ainsi améliorer le contrôle du convertisseur en cas de surtension. De manière non limitative, les dispositifs coupe-circuits peuvent être commandés simultanément ou successivement.

Un intérêt est de pouvoir isoler un unique demi-bras supérieur et de protéger le convertisseur de manière ciblée.

Chacun de ces dispositifs coupe-circuits est avantageusement configuré pour s'ouvrir lorsque la tension aux bornes du demi-bras supérieur dans lequel il est connecté atteint la tension maximale pouvant être générée par la chaine de sous-modules de ce demi-bras supérieur.

Avantageusement, ledit au moins un dispositif coupe-circuit est apte à supporter une tension au moins égale à la tension nominale d'un premier réseau d'alimentation électrique continu, lorsqu'un tel premier réseau d'alimentation électrique continu est connecté aux premier et deuxième terminaux continus du convertisseur. Un intérêt est d'améliorer la protection du convertisseur, notamment en cas de tension sensiblement nulle entre les troisième et quatrième terminaux continus. En particulier, une panne d'un second réseau d'alimentation électrique continu connecté entre les troisième et quatrième terminaux continus implique une telle tension nulle entre ces terminaux. Ledit au moins un dispositif coupe-circuit est alors soumis à une tension sensiblement égale à la différence entre la tension nominale $v_{Nsup}$ aux bornes des sous-modules du demi-bras supérieur en fonctionnement normal du convertisseur et la tension nominale du premier réseau d'alimentation électrique continu connecté entre les premier et deuxième terminaux continus, lorsque les condensateurs des sous-modules dudit demi-bras supérieur sont chargés. Lorsque ces condensateurs se déchargent naturellement, le dispositif coupe-circuit est alors soumis à une tension au moins égale à la tension nominale du premier réseau d'alimentation électrique continu.

De manière avantageuse, ledit au moins un dispositif coupe-circuit est configuré de sorte que le temps de commutation pour passer de sa position fermée à sa position ouverte est de l'ordre de quelques millisecondes, de préférence moins de 10 millisecondes. Le dispositif coupe-circuit est donc apte à commuter et notamment à passer de la position fermée à la position ouverte très rapidement. Ceci améliore la protection du convertisseur et réduit les risques d'endommagement du convertisseur en cas de surtension dans le demi-bras supérieur.

Préférentiellement, ledit au moins un dispositif coupe-circuit comprend au moins un interrupteur par séparation de contacts mécanique. De manière non limitative, le dispositif coupe-circuit peut comprendre un interrupteur haute tension et/ou un sectionneur rapide. L'interrupteur permet d'interrompre un courant sensiblement égal à un courant en fonctionnement normal du convertisseur. Un sectionneur est configuré pour être ouvert à courant nul.

De préférence, le dispositif coupe-circuit comprend au moins un composant semi-conducteur. De manière non limitative, le dispositif coupe-circuit peut comprendre un interrupteur électronique à base de composants semi-conducteurs.

De manière non limitative, le dispositif coupe-circuit peut comprendre un interrupteur hybride comprenant un moyen de séparation de contacts mécanique et au moins un composant semi-conducteur.

Avantageusement, le module de filtrage comprend au moins une inductance connectée entre le point milieu dudit au moins un bras et le troisième terminal continu. Le module de filtrage forme alors un filtre passif peu encombrant et peu coûteux. De manière non limitative, lorsque le convertisseur comprend une pluralité de bras, le module de filtrage peut comprendre une pluralité d'inductances, à raison d'une par bras, chacune de ces inductances étant reliée au point milieu d'un des bras.

De préférence, le module de filtrage comprend au moins une chaine de sous-modules, ladite chaine de sous-modules comportant une pluralité de sous-modules commandables individuellement par un organe de commande propre à chaque sous-module et chaque sous-module comprenant un condensateur, l'organe de commande de chaque sous-module pouvant prendre au moins un premier état dans lequel le condensateur est inséré dans la chaine de sous-modules et un deuxième état dans lequel le condensateur n'est pas inséré dans ladite chaine de sous-modules.

De manière avantageuse, le convertisseur comprend en outre un module de contrôle configuré pour commander l'ouverture du dispositif coupe-circuit lorsque la tension aux bornes du demi-bras supérieur dudit au moins un bras atteint la tension maximale pouvant être générée par la chaine de sous-modules dudit demi-bras supérieur.

De préférence, le module de contrôle est également configuré pour contrôler les organes de commande des sous-modules du convertisseur, afin de réguler les tensions aux bornes des chaines de sous-modules du convertisseur.

L'invention porte par ailleurs sur un procédé de contrôle d'un convertisseur permettant de convertir une première tension continue en une seconde tension continue et inversement, le convertisseur comportant :

- des premier et second terminaux continus configurés pour être reliés électriquement à un premier réseau d'alimentation électrique continu ;
- des troisième et quatrième terminaux continus configurés pour être reliés électriquement à un second réseau d'alimentation électrique continu;
- au moins un bras connectés entre le premier terminal continu et le deuxième terminal continu, ledit au moins un bras comportant un demi-bras supérieur et un demi-bras inférieur reliés électriquement l'un à l'autre en un point milieu, chaque demi-bras comprenant une chaine de sous-modules comportant une pluralité de sous-modules commandables individuellement par un organe de commande propre à chaque sous-module et chaque sous-module comprenant un condensateur, l'organe de commande de chaque sous-module pouvant prendre au moins un premier état dans lequel le condensateur est inséré dans la chaine de sous-modules et un deuxième état dans lequel le condensateur n'est pas inséré dans ladite chaine de sous-modules, chaque chaine de sous-modules pouvant être modélisée par une source de tension apte à générer une tension à ses bornes dépendant d'un nombre de condensateurs mis en série dans ladite chaine de sous-modules, chaque demi-bras comprenant une inductance connectée en série avec la chaine de sous-modules dudit demi-bras ;
- un module de filtrage reliant électriquement ledit point milieu dudit au moins un bras au troisième terminal continu, ledit module de filtrage étant configuré pour limiter la circulation d'un courant électrique alternatif vers ledit troisième terminal continu ; et
- au moins un dispositif coupe-circuit connecté en série avec la chaine de sous-modules du demi-bras supérieur dudit au moins un bras du convertisseur, entre le point milieu dudit bras et le premier terminal continu, ledit dispositif coupe-circuit pouvant prendre une position ouverte et une position fermée, ledit dispositif coupe-circuit étant configuré pour s'ouvrir lorsque la tension aux bornes du demi-bras supérieur atteint la tension maximale pouvant être générée par la chaine de sous-modules dudit demi-bras supérieur.

Avantageusement, le procédé comprend en outre, en cas de chute de la tension entre les troisième et quatrième terminaux continus, les étapes selon lesquelles :

- on place les organes de commande de la chaine de sous-modules du demi-bras inférieur dudit au moins un bras dans le premier état, de manière à insérer les condensateurs de ladite chaine de sous-modules du demi-bras inférieur en série dans ladite chaine de sous-modules ; puis

- on place ledit au moins un dispositif coupe-circuit en position ouverte afin d'interrompre la circulation d'un courant dans ledit demi-bras supérieur dudit au moins un bras.

On comprend que la chute de tension entre les troisième et quatrième terminaux continus entraine une surtension dans le demi-bras supérieur, de sorte que la tension aux bornes du demi-bras supérieur dudit au moins un bras atteint et devient supérieure ou égale à la tension maximale pouvant être générée par la chaine de sous-modules dudit demi-bras supérieur.

L'étape selon laquelle on place les organes de commande des sous-modules de la chaine de sous-modules du demi-bras inférieur dans le premier état permet de générer une tension la plus importante possible aux bornes de cette chaine de sous-modules.

Sans sortir du cadre de l'invention, le procédé peut comprendre une étape préalable de détection d'une chute de tension, entre les troisième et quatrième terminaux continus, par exemple au moyen d'un dispositif de mesure de tension.

De préférence, les organes de commande des sous-modules des chaines de sous-modules peuvent prendre en outre un état non-commandé, le procédé comprenant en outre une étape selon laquelle, avant de placer les organes de commande de la chaine de sous-modules du demi-bras inférieur dudit au moins un bras dans le premier état, on place les organes de commande des sous-modules de la chaine de sous-modules du demi-bras supérieur dudit au moins un bras dans l'état non-commandé.

De manière non limitative, les organes de commande des sous-modules du demi-bras supérieur dudit au moins un bras peuvent être placés dans l'état non-commandé simultanément à la mise en premier état des organes de commande de la chaine de sous-modules du demi-bras inférieur dudit au moins un bras.

Dans le mode de réalisation non-limitatif où le convertisseur de tension comprend plusieurs bras, on comprend que ledit demi-bras supérieur et ledit demi-bras inférieur appartiennent au même bras.

Avantageusement, le procédé comprend en outre une étape selon laquelle, après avoir placé l'ensemble des organes de commande de ladite chaine de sous-modules du demi-bras inférieur dudit au moins un bras dans le premier état et avant de placer le dispositif coupe-circuit en position ouverte, on commande les organes de commande de ladite chaine de sous-modules dudit demi-bras inférieur de manière à générer une tension dans ledit demi-bras inférieur permettant de maintenir un courant sensiblement nul dans ledit demi-bras supérieur.

## Brève description des dessins

L'invention sera mieux comprise à la lecture de la description qui suit de modes de réalisation de l'invention donnés à titre d'exemples non limitatifs, en référence aux dessins annexés, sur lesquels :

[Fig. 1] La figure **1** illustre une installation HVDC comprenant un premier mode de réalisation d'un convertisseur de tension selon l'invention ;

[Fig. 2]La figure **2** illustre un sous-module en demi-pont du convertisseur de tension de la figure **1;**

[Fig. 3A-3D]Les figures **3A** à **3D** sont des représentations graphiques illustrant le contrôle du convertisseur de la figure **1** en cas de chute de tension entre les troisième et quatrième terminaux continus, en fonction du temps ;

[Fig. 4]La figure **4** illustre les étapes d'un procédé de contrôle d'un convertisseur selon l'invention ;

[Fig. 5]La figure **5** illustre une installation HVDC comprenant un second mode de réalisation d'un convertisseur de tension selon l'invention ;

[Fig. 6]La figure **6** illustre le nombre de sous-modules nécessaire à la protection du demi-bras supérieur d'un convertisseur selon la technique antérieure ; et

[Fig. 7]La figure **7** illustre le nombre de sous-modules nécessaire à la protection du demi-bras supérieur d'un convertisseur selon l'invention.

## Description des modes de réalisation

L'invention porte sur un convertisseur de tension permettant de convertir une première tension continue en une seconde tension continue en inversement.

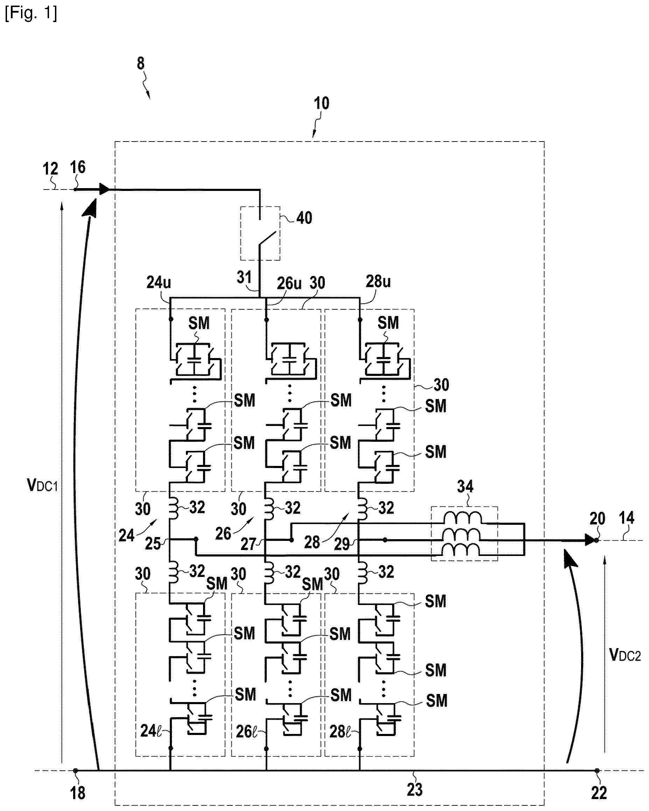

La figure **1** illustre une installation HVDC **8** comprenant un premier mode de réalisation d'un convertisseur de tension **10** selon l'invention, connectant entre eux un premier réseau d'alimentation électrique continu **12** et un second réseau d'alimentation électrique continu **14** de l'installation. Le convertisseur de tension **10** selon l'invention forme donc un convertisseur DC/DC. Selon l'invention, le convertisseur comprend une pluralité de bras **24,26,28,** un module de filtrage **34** et un dispositif coupe-circuit **40.**

Comme on le constate sur la figure **1,** le convertisseur de tension **10** comprend un premier terminal continu **16** et un deuxième terminal continu **18** configurés pour être reliés électriquement au premier réseau d'alimentation électrique continu **12.** La tension nominale $V_{DC1}$ du premier réseau d'alimentation électrique continu **12** est illustrée entre le premier terminal continu **16** et le deuxième terminal continu **18.**

Le convertisseur de tension **10** comprend en outre un troisième terminal continu **20** un quatrième terminal continu **22** configurés pour être reliés électriquement au second réseau d'alimentation électrique continue **14.** La tension nominale $V_{DC2}$ du second réseau d'alimentation électrique continu **14** est illustrée entre le troisième terminal continu **20** et le quatrième terminal continu **22.**

Les deuxième et quatrième terminaux continus **18,22** sont reliés électriquement entre eux. Dans cet exemple non limitatif, les deuxième et quatrième terminaux continus sont reliés entre eux par une ligne de masse **23** ayant un potentiel électrique nul.

De manière non limitative, le convertisseur **10** comprend par ailleurs un premier bras **24,** un deuxième bras **26** et un troisième bras **28,** chacun des bras étant connecté entre le premier terminal continu **16** et la ligne de masse **23** et donc entre le premier terminal continu **16** et le deuxième terminal continu **18.** Les trois bras **24,26,28** sont connectés en parallèle les uns avec les autres. Dans ce premier mode de réalisation, non limitatif, les premier, deuxième et troisième bras **24,26,28** sont reliés entre eux en un point supérieur **31.**

Dans ce premier mode de réalisation, le premier demi-bras supérieur **24u** est donc connecté entre le premier point milieu **25** et le point supérieur **31,** qui forment ses bornes. De même, le deuxième demi-bras supérieur **26u** est connecté entre le deuxième point milieu **27** et le point supérieur **31,** qui forment ses bornes. Le troisième demi-bras supérieur **28u** est connecté entre le troisième point milieu **29** et le point supérieur **31,** qui forment ses bornes. Sans sortir du cadre de l'invention, le convertisseur pourrait ne comprendre qu'un seul bras.

Le premier bras **24** comprend un premier demi-bras supérieur **24u** et un premier demi-bras inférieur **24l** reliés électriquement l'un à l'autre en un premier point milieu **25.** Le deuxième bras **26** comprend un deuxième demi-bras supérieur **26u** et un deuxième demi-bras inférieur **26l** reliés électriquement l'un à l'autre en un deuxième point milieu **27.** Le troisième bras **28** comprend un troisième demi-bras supérieur **28u** et un troisième demi-bras inférieur **28l** reliés électriquement l'un à l'autre en un troisième point milieu **29.**

Chacun des demi-bras supérieur et inférieur comprend une chaine de sous-modules **30** comprenant chacune une pluralité de sous-modules **SM** connectés en série dans le demi-bras correspondant.

Les sous-modules **SM** sont commandables individuellement suivant une séquence souhaitée afin de modifier la tension aux bornes de chacune des chaines de sous-modules.

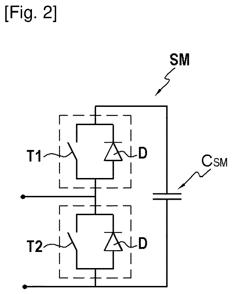

La figure **2** illustre un sous-module **SM** ayant une topologie en demi-pont. Ce sous-module **SM** comprend un condensateur $C_{SM}$, et un organe de commande **T1,T2** permettant de commander individuellement chaque sous-module **SM.** De manière non limitative, l'organe de commande **T1,T2** comporte un premier élément de commutation électronique **T1** tel qu'un transistor bipolaire à grille isolée (« IGBT : Insulated Gate Bipolar Transistor » en langue anglaise) connecté avec le condensateur $C_{SM}$. Ce premier élément de commutation **T1** et ce condensateur $C_{SM}$ sont montés en parallèle d'un deuxième élément de commutation électronique **T2,** également un transistor bipolaire à grille isolée (IGBT). Ce deuxième élément de commutation électronique **T2** est couplé entre les bornes d'entrée et de sortie du sous-module **SM.** Les premier et deuxième éléments de commutation **T1** et **T2** sont tous deux associés à une diode antiparallèle **D** représentée sur la figure **2.**

De manière non limitative, les éléments de commutations pourraient être de type IGBTs, MOSFETs ou des IGCTs.

L'organe de commande de chaque sous-module **SM** peut prendre un premier état dans lequel le condensateur $C_{SM}$ est inséré dans la chaine de sous-modules correspondante et un deuxième état dans lequel le condensateur n'est pas inséré dans ladite chaine de sous-modules. De manière non limitative, l'organe de commande peut prendre en outre un état non-commandé dans lequel les premier et deuxième éléments de commutation **T1,T2** sont ouverts de sorte que l'insertion du condensateur $C_{SM}$ dépend du signe du courant circulant dans le demi-bras correspondant, compte-tenu des diodes anti-parallèles.

Sans sortir du cadre de l'invention l'ensemble ou une partie des sous-modules **SM** des chaines de sous-modules **30** pourraient avoir une topologie en pont complet.

Chaque chaine **30** de sous-modules **SM** peut être modélisée par une source de tension contrôlable apte à générer une tension à ses bornes dépendant du nombre de condensateurs insérés et mis en série dans ladite chaine de sous-modules **30.** Le nombre $N_{SMsup}$ de sous-modules **SM** des chaines **30** de sous-modules des premier, deuxième et troisième demi-bras supérieurs **24u,26u,28u** est avantageusement choisi de sorte que ces chaines de sous-modules soient aptes à générer une tension nominale $v_{Nsup}$ à leurs bornes permettant un fonctionnement normal du convertisseur, hors panne et incident. Chacune des chaines de sous-modules **30** est en outre apte à générer une tension maximale, correspondant à la tension générée par ladite chaine de sous-modules lorsque l'ensemble des condensateurs de ses sous-modules sont insérés dans ladite chaine de sous-modules **30.** Cette tension maximale est avantageusement égale ou légèrement supérieure au maximum de la tension nominale $v_{Nsup}$, la tension $v_{Nsup}$ présentant une composante alternative.

Chacun des demi-bras supérieurs **24u,26u,28u** et inférieurs **24l,26l,28l** comprend en outre une inductance **32** connectée en série avec la chaine de sous-modules **30** dudit demi-bras. Le contrôle des tensions générées par les chaines de sous-modules **30** permet d'imposer les tensions aux bornes des inductances **32** et donc de contrôler les courants circulant dans les demi-bras du convertisseur. Le convertisseur **10** comprend par ailleurs un module de filtrage **34** connecté électriquement entre le troisième terminal continu **20** et chacun des bras **24,26,28** du convertisseur. Plus précisément, le module de filtrage **34** est connecté aux premier, deuxième et troisième points milieux **25,27,29** respectivement des premier, deuxième et troisième bras **24,26,28**. Dans cet exemple non limitatif, le module de filtrage **34** comprend trois inductances, chacune étant reliée à un des bras du convertisseur. Le module de filtrage est configuré pour limiter la circulation d'un courant électrique alternatif vers le troisième terminal continu **20** et notamment pour réduire la valeur de ce courant.

Dans ce premier mode de réalisation non limitatif, illustré en figure **1,** le convertisseur comprend un unique dispositif coupe-circuit **40** qui est connecté entre les points milieux **25,27,29** des bras **24,26,28** et le premier terminal continu **16.** Plus précisément, dans ce premier mode de réalisation, le dispositif coupe-circuit **40** est connecté entre le point supérieur **31** des demi-bras supérieurs et le premier terminal continu **16.**

Le dispositif coupe-circuit **40** peut être placé dans une position ouverte ou dans une position fermée afin d'autoriser ou interrompre simultanément la circulation d'un courant électrique dans les premier, deuxième et troisième demi-bras supérieurs **24u,26u,28u.** Il peut être de type interrupteur à séparation de contacts mécanique, de type interrupteur électrique à base de composants semi-conducteurs ou encore de type interrupteur hybride comprenant des composants semi-conducteurs et comprenant un moyen de séparation de contacts mécanique.

Le dispositif coupe-circuit **40** est apte à supporter des hautes tensions, de l'ordre de plusieurs milliers de volts. Il est en outre configuré de sorte que son temps de commutation entre la position fermée et la position ouverte est de l'ordre de quelques millisecondes, de préférence moins de 10 millisecondes.

Selon l'invention, le dispositif coupe-circuit **40** est configuré pour s'ouvrir, c'est-à-dire être placé en position ouverte, lorsque la tension aux bornes d'au moins un des demi-bras supérieurs **24u,26u,28u** d'un des bras atteint la tension maximale pouvant être générée, et donc supportée par la chaine de sous-modules dudit demi-bras supérieur. En d'autres mots, le dispositif-coupe circuit **40** est configuré pour s'ouvrir lorsque au moins un des demi-bras supérieur est soumis à une tension supérieure à la tension pouvant être supportée par la chaine de sous-modules de ce demi-bras supérieur. Le dispositif coupe-circuit **40** s'ouvre donc en cas de surtension aux bornes d'au moins un des demi-bras supérieurs **24u,26u,28u** et permet ainsi de protéger les sous-modules **SM** des demi-bras supérieurs et donc le convertisseur **10** contre la surtension.

Grâce à l'invention, le nombre $N_{SMsup}$ de sous-modules **SM** des chaines de sous-modules **30** des demi-bras supérieurs **24u,26u,28u** peut être réduit par rapport aux convertisseurs de l'art antérieur et limité au nombre $N_{SMsup}$ de sous-modules **SM** permettant générer la tension nominale $v_{Nsup}$ correspondant au fonctionnement normal du convertisseur. La protection du convertisseur contre la surtension est assurée par le dispositif coupe-circuit **40,** et non par de nombreux sous-modules ajoutés dans cet unique but dans les dispositifs de l'art antérieur.

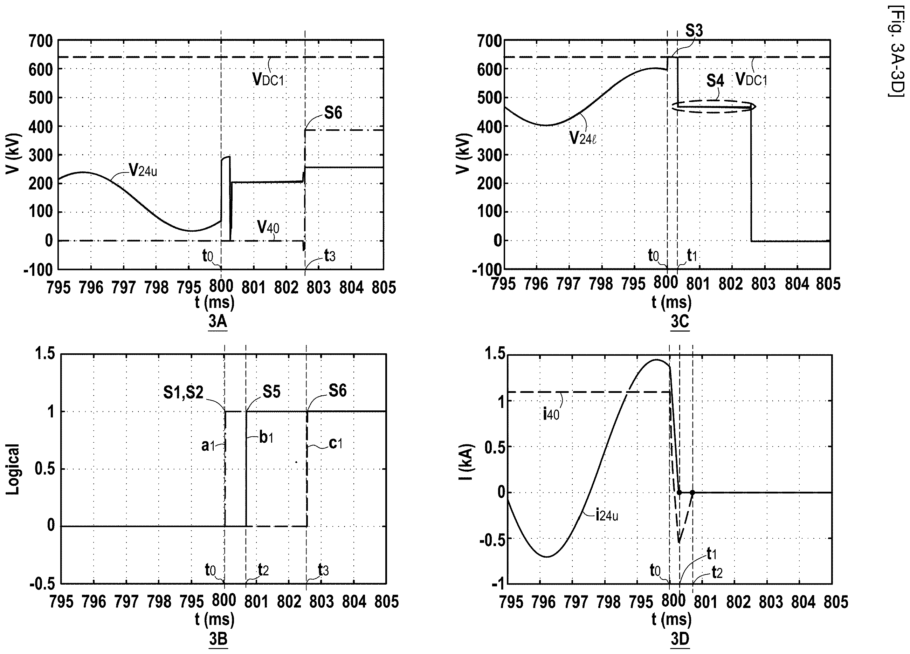

A l'aide des graphiques des figures **3A** à **3D,** nous allons maintenant décrire un premier mode de mise en oeuvre d'un procédé de contrôle d'un convertisseur de tension **10** selon l'invention, et plus précisément du convertisseur de la figure **1,** permettant d'assurer la protection du convertisseur en cas de défaut entre les troisième et quatrième terminaux continus **20,22.**

Pour des raisons de lisibilité, seuls les courants et tensions du premier bras **24** sont illustrés sur les figures **3A** à **3D.** Le comportement de ces grandeurs pour les deuxième et troisième bras **26,28** est similaire à celui du premier bras et le contrôle des sous-modules du premier bras est similaire à celui des sous-modules des deuxième et troisième bras.

Sur la figure **3A,** la courbe $V_{24u}$ illustre l'évolution de la tension aux bornes du premier demi-bras supérieur **24u** en fonction du temps. La courbe $V_{40}$ illustre l'évolution de la tension aux bornes du dispositif coupe-circuit **40** en fonction du temps.

Sur la figure **3B,** la courbe $a_1$ correspond à un signal de blocage des sous-modules du premier demi-bras supérieur **24u.** La courbe $b_1$ correspond à un signal d'ouverture du dispositif coupe-circuit **40.** La courbe $c_1$ correspond à un signal de blocage des sous-modules du premier demi-bras inférieur **24l.**

Sur la figure **3C,** la courbe $V_{24l}$ illustre l'évolution de la tension du premier demi-bras inférieur **24l** en fonction du temps.

Sur la figure **3D,** la courbe $i_{24l}$ illustre l'évolution du courant circulant dans le premier demi-bras supérieur **24u** en fonction du temps. La courbe $i_{40}$ illustre l'évolution du courant traversant le dispositif coupe-circuit **40.**

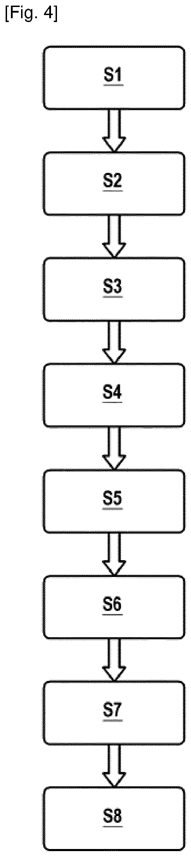

La figure **4** illustre les étapes **S1** à **S8** d'un mode de mise en oeuvre d'un procédé de contrôle d'un convertisseur selon l'invention.

Sur les figures **3A** et **3C,** la courbe $V_{DC1}$ illustre l'évolution, en fonction du temps, de la tension entre les premier et deuxième terminaux continus **16,18** du convertisseur **10,** lorsqu'un premier réseau d'alimentation électrique continu **12** est connecté à ces premier et deuxième terminaux continus. Cette tension correspond à la tension nominale dudit premier réseau d'alimentation électrique continu **12.**

Avant l'instant $t_0$=800 millisecondes (ms), le convertisseur **10** fonctionne normalement. Il est connecté entre le premier réseau d'alimentation électrique continu **12** et le second réseau d'alimentation électrique continu **14** et permet de convertir une première tension continue en une seconde tension continue. En outre, le dispositif coupe-circuit **40** est en position fermée. La tension nominale du premier réseau d'alimentation électrique continu **12** est environ égale à 640 kilo-Volts (kV). La tension aux bornes du premier demi-bras supérieur **24u** présente une composante alternative et une composante continue.

Selon une première étape **S1**, à l'instant $t_0$=800 ms, on détecte une chute de tension entre les troisième et quatrième terminaux continus **20,22** du convertisseur **10**. De manière non limitative, cette détection peut être réalisée au moyen d'un dispositif de mesure de tension. La chute de tension peut être liée à une panne du second réseau d'alimentation électrique continu **14** et risque d'entrainer une surtension dans le premier demi-bras supérieur **24u**. On constate sur la figure **3A** que la tension du premier demi-bras supérieur augmente subitement à l'instant $t_0$. En particulier, la tension aux bornes du premier demi-bras supérieur **24u** atteint la tension maximale pouvant être générée par la chaine de sous-modules **30** dudit premier demi-bras supérieur. Selon l'invention, ceci va entrainer l'ouverture du dispositif coupe-circuit **40**.

Comme illustré sur la figure **3B**, simultanément à cette première étape **S1**, on réalise une deuxième étape **S2** selon laquelle on génère un signal de blocage des sous-modules **SM** de la chaine de sous-modules du premier demi-bras supérieur **24u**, se traduisant par un échelon sur la courbe $a_1$. Lesdits sous-modules **SM** sont alors placés dans un état non-commandé, dans lequel les éléments de commutation **T1,T2** des sous-modules du premier demi-bras supérieur sont placés en position ouverte.

Selon une troisième étape **S3**, les organes de commande des sous-modules des chaines de sous-modules **30** du premier demi-bras inférieur **24I** sont placés dans le premier état, de manière à insérer l'ensemble des condensateurs de ces sous-modules dans ladite chaine de sous-modules. La tension $V_{24I}$ du premier demi-bras inférieur atteint alors son maximum, qui est ici environ égal à la tension $V_{DC1}$ et donc à 640 kV, comme illustré en figure **3C**.

Tel qu'illustré sur la figure **3D**, cette troisième étape **S3** a en outre pour conséquence de faire chuter le courant $i_{24u}$ circulant dans le premier demi-bras supérieur **24u**.

Lorsque le courant $i_{24u}$ circulant dans le premier demi-bras supérieur **24u** devient sensiblement nul, à l'instant $t_1$=800.3 ms, on réalise une quatrième étape **S4** selon laquelle on contrôle les organes de commande **T1,T2** des sous-modules de la chaine de sous-modules du premier demi-bras inférieur **24I**, afin de maintenir la tension $V_{24I}$ du premier demi-bras inférieure à une valeur constante, ici environ égale à 470 kV, tel qu'illustré en figure **3C**. Cette tension permet de maintenir le courant $i_{24u}$ circulant dans le premier demi-bras supérieur **24u** à une valeur sensiblement nulle, comme on peut le voir en figure **3D**.

Selon une cinquième étape **S5**, tel qu'illustré en figure **3B**, à l'instant $t_2$= 800.8 ms, dans la mesure où la tension aux bornes du premier demi-bras supérieur **24u** a atteint la tension maximale pouvant être générée par la chaine de sous-modules dudit premier demi-bras supérieur, on génère un signal d'ouverture du dispositif coupe-circuit **40**, se traduisant par un échelon sur la courbe $b_1$, visant à amener le dispositif coupe-circuit **40** de sa position fermée vers sa position ouverte. Dans cet exemple non limitatif, l'ouverture du dispositif coupe-circuit **40** est réalisée à courant et tension nuls.

Comme on peut le voir en figure **3A**, le dispositif coupe-circuit **40** atteint la position ouverte à l'instant $t_3$=802.6 ms. De manière non limitative, le temps de commutation du dispositif coupe-circuit entre la position fermée et la position ouverte est donc d'environ 1.8 ms.

Lorsque le dispositif coupe-circuit **40** atteint sa position ouverte, sa tension $V_{40}$ augmente subitement. Le dispositif coupe-circuit assure alors la protection des sous-module **SM** des chaines de sous-modules **30** du premier demi-bras supérieur contre une surtension apparaissant entre le premier terminal continu et le troisième terminal continu. On constate que la tension $V_{24u}$ du premier demi-bras supérieur est maintenue à une tension environ égale 260 kV, correspondant sensiblement à la tension maximale qu'il est apte à générer.

Selon une sixième étape **S6**, lorsque le dispositif coupe-circuit **40** est ouvert, les sous-modules de la chaine de sous-modules du premier demi-bras inférieur sont placés dans l'état non-commandé.

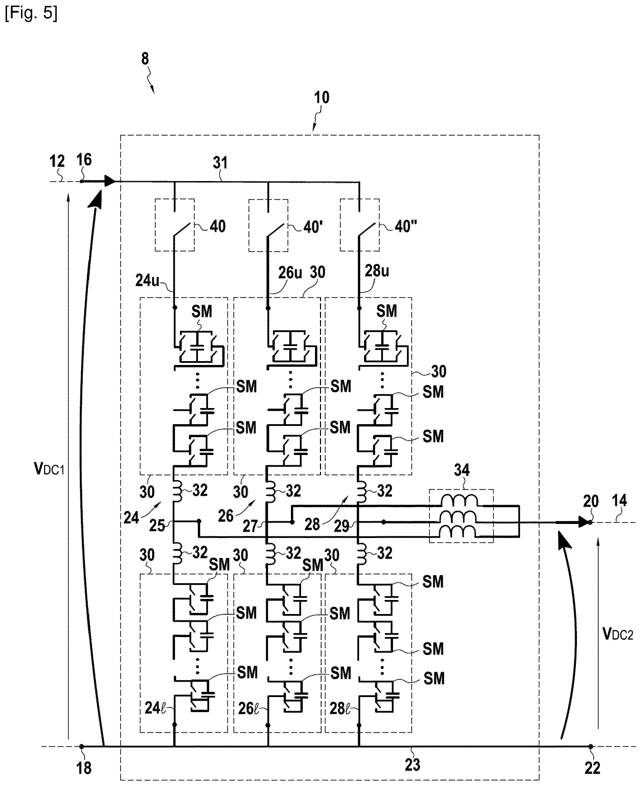

La figure **5** illustre un second mode de réalisation d'un convertisseur selon l'invention. Dans cette variante, le convertisseur comprend un premier dispositif coupe-circuit **40**, un deuxième dispositif coupe-circuit **40'** et un troisième dispositif coupe-circuit **40"** connectés en série respectivement dans les premier, deuxième et troisième demi-bras supérieurs **24u,26u,28u**.

Plus précisément, le premier dispositif coupe-circuit **40** est connecté entre le point supérieur **31** et le premier point milieu **25** du premier bras **24**. Le deuxième dispositif coupe-circuit **40'** est connecté entre le point supérieur **31** et le deuxième point milieu **27** du deuxième bras **26**. Le troisième dispositif coupe-circuit **40"** est connecté entre le point supérieur **31** et le troisième point milieu **29** du troisième bras **28**.

Les premier, deuxième et troisième dispositifs coupe-circuits **40,40',40"** peuvent être commandés conjointement et simultanément ou indépendamment les uns des autres, de manière successive.

Dans ce second mode de réalisation, chacun des dispositifs coupe-circuits est configuré pour s'ouvrir lorsque la tension aux bornes du demi-bras supérieur dans lequel il est connecté atteint la tension maximale pouvant être générée par la chaine de sous-modules dudit demi-bras supérieur. Chacun des demi-bras supérieurs peut donc être protégé indépendamment.

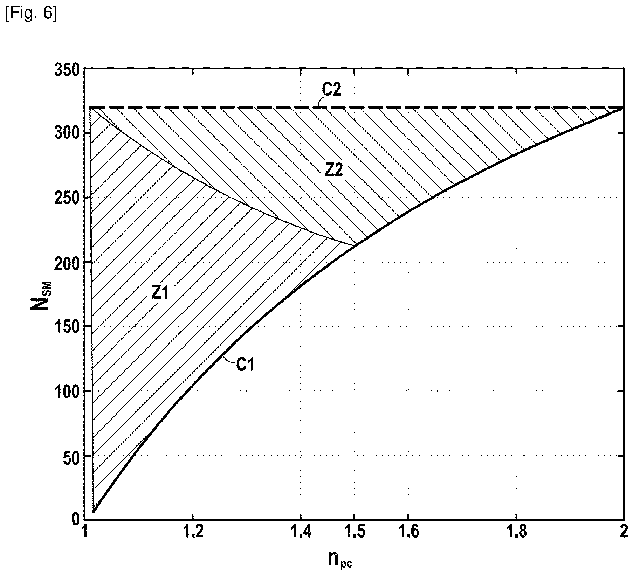

La figure **6** illustre le nombre de sous-modules nécessaires à la protection d'un convertisseur selon la technique antérieure. Sur la figure **6,** la courbe **C1** illustre le nombre de sous-modules nécessaires dans une chaine de sous-modules d'un demi-bras supérieur pour permettre le fonctionnement normal d'un convertisseur selon l'art antérieur, en fonction du rapport de transformation $n_{DC}$ de ce convertisseur. Dans cet exemple, la chaine de sous-modules peut générer une tension maximale de 640kV et les condensateurs de chaque sous-module présentent une tension de 2kV à leurs bornes. La courbe **C2** représente le nombre de sous-modules que comprennent réellement les demi-bras supérieurs de ces convertisseurs selon l'art antérieur, afin de protéger ces convertisseurs d'une surtension. La zone **Z1** représente le nombre de sous-modules de type pont complet ajoutés afin de protéger le convertisseur d'une surtension tandis que la zone **Z2** illustre le nombre de sous-modules de type demi-pont ajoutés afin de protéger le convertisseur. Le convertisseur selon l'invention permet de s'affranchir de l'ajout de ces convertisseurs et permet donc de réduire le poids, l'encombrement et le coût du convertisseur.

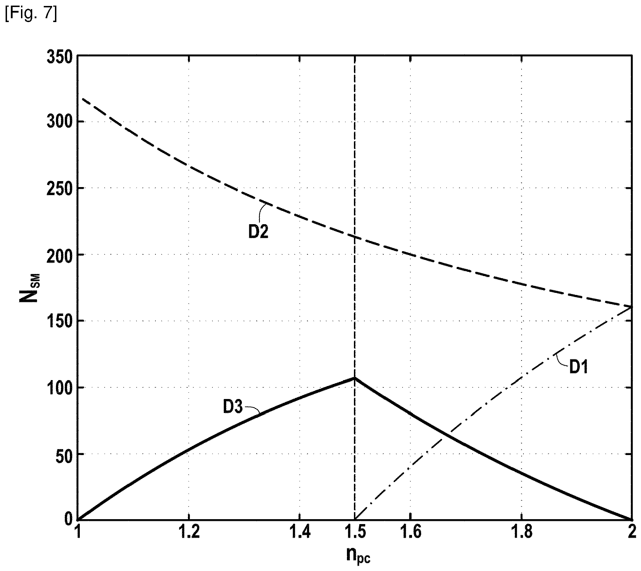

Sur la figure **7,** les courbes **D1** et **D2** illustrent respectivement le nombre de sous-modules en demi-pont et en pont complet disposés dans les chaines de sous-modules des demi-bras supérieurs d'un convertisseur selon l'invention, en fonction du rapport de transformation $n_{DC}$ du convertisseur.

La courbe **D3** illustre le gain en nombre total de sous-modules disposés dans une chaine de sous-modules du demi-bras supérieur d'un convertisseur selon l'invention, par rapport à un convertisseur selon la technique antérieure.

## Revendications

**1.** Convertisseur de tension (10) permettant de convertir une première tension continue en une seconde tension continue et inversement, le convertisseur comportant :

- des premier et second terminaux continus (16,18) configurés pour être reliés électriquement à un premier réseau d'alimentation électrique continu (12) ;
- des troisième et quatrième terminaux continus (20,22) configurés pour être reliés électriquement à un second réseau d'alimentation électrique continu (14);
- au moins un bras (24) s'étendant entre le premier terminal continu et le deuxième terminal continu, ledit au moins un bras comportant au moins un demi-bras supérieur (24u) et un demi-bras inférieur (24l) reliés électriquement l'un à l'autre en un point milieu (25), chaque demi-bras comprenant une chaine de sous-modules (30) comportant une pluralité de sous-modules (SM) commandables individuellement par un organe de commande (T1,T2) propre à chaque sous-module et chaque sous-module comprenant un condensateur, l'organe de commande de chaque sous-module pouvant prendre au moins un premier état dans lequel le condensateur est inséré dans la chaine de sous-modules et un deuxième état dans lequel le condensateur n'est pas inséré dans ladite chaine de sous-modules, chaque chaine de sous-modules pouvant être modélisée par une source de tension apte à générer une tension à ses bornes dépendant d'un nombre de condensateurs mis en série dans ladite chaine de sous-modules, chaque demi-bras comprenant une inductance (32) connectée en série avec la chaine de sous-modules dudit demi-bras ;
- un module de filtrage (34) reliant électriquement ledit point milieu dudit au moins un bras au troisième terminal continu, ledit module de filtrage étant configuré pour limiter la circulation d'un courant électrique alternatif vers ledit troisième terminal continu ;

caractérisé en ce q'il comprend

- au moins un dispositif coupe-circuit (40) connecté entre le point milieu dudit au moins un bras et le premier terminal continu, ledit dispositif coupe-circuit pouvant prendre une position ouverte et une position fermée, ledit dispositif coupe-circuit étant configuré pour s'ouvrir lorsque la tension aux bornes du demi-bras supérieur dudit au moins un bras atteint la tension maximale pouvant être générée par la chaine de sous-modules dudit demi-bras supérieur.

**2.** Convertisseur de tension selon la revendication **1,** dans lequel la tension maximale pouvant être générée par ladite chaine de sous-modules (30) du demi-bras supérieur (24u) dudit au moins un bras est inférieure à la tension entre les premier et deuxième terminaux continus (26,28) lorsque lesdits premier et deuxième terminaux continus sont connectés à un premier réseau d'alimentation électrique continu (12).

3. Convertisseur de tension selon la revendication **1 ou 2,** dans lequel ledit au moins un dispositif coupe-circuit (40) est connecté entre le premier terminal continu et la chaine de sous-modules du demi-bras supérieur (24u) dudit au moins un bras (24).

4. Convertisseur de tension selon l'une quelconque des revendications **1 à 3,** comprenant une pluralité de bras (24,26,28) connectés entre le premier terminal continu (26) et le deuxième terminal continu (28), chaque bras comportant un demi-bras supérieur (24u,26u,28u) et un demi-bras inférieur (24l,26l,28l) reliés l'un à l'autre en un point milieu (25,27,29), chaque demi-bras comprenant une chaine de sous-modules (30) et une inductance (32) connectée en série avec la chaine de sous-modules dudit demi-bras.

5. Convertisseur de tension selon la revendication **4,** dans lequel l'ensemble des demi-bras supérieurs (24u,26u,28u) sont connectés électriquement entre eux en un point supérieur (31) et dans lequel ledit au moins un dispositif coupe-circuit (40) est connecté entre ledit point supérieur et le premier terminal continu (16).

6. Convertisseur de tension selon la revendication **4,** dans lequel l'ensemble des demi-bras supérieurs (24u,26u,28u) sont connectés entre eux en un point supérieur (31) et dans lequel ledit au moins un dispositif coupe-circuit (40) est connecté en série dans le demi-bras supérieur d'un des bras, entre ledit point supérieur et le point milieu dudit un bras (25,27,29).

7. Convertisseur de tension selon la revendication **6, caractérisé en ce qu'**il comprend une pluralité de dispositifs coupe-circuits (40,40',40"), chacun des dispositifs coupe-circuits étant connecté en série dans un demi-bras supérieur (24u,26u,28u) d'un des bras (24,26,28) du convertisseur (10) entre ledit point supérieur (31) et le point milieu (25,27,29) du bras correspondant.

8. Convertisseur de tension selon l'une quelconque des revendications **1 à 7,** dans lequel ledit au moins un dispositif coupe-circuit (40) est apte à supporter une tension au moins égale à la tension nominale d'un premier réseau d'alimentation électrique continu (12), lorsqu'un tel premier réseau d'alimentation électrique continu est connecté aux premier et deuxième terminaux continus (16,18) du convertisseur.

9. Convertisseur de tension selon l'une quelconque des revendications **1 à 8,** dans lequel ledit au moins un dispositif coupe-circuit (40) est configuré de sorte que le temps de commutation pour passer de sa position fermée à sa position ouverte est de l'ordre de quelques millisecondes, de préférence moins de 10 millisecondes.

10. Convertisseur de tension selon l'une quelconque des revendications **1 à 9,** dans lequel ledit au moins un dispositif coupe-circuit (40) comprend au moins un interrupteur par séparation de contacts mécanique.

11. Convertisseur de tension selon l'une quelconque des revendications **1 à 10,** dans lequel le dispositif coupe-circuit (40) comprend au moins un composant semi-conducteur.

12. Convertisseur de tension selon l'une quelconque des revendications **1 à 11,** dans lequel le module de filtrage (34) comprend au moins une inductance connectée entre le point milieu (25) dudit au moins un bras (24) et le troisième terminal continu (20).

13. Convertisseur de tension selon l'une quelconque des revendications **1 à 12,** comprenant en outre un module de contrôle configuré pour commander l'ouverture du dispositif coupe-circuit (40) lorsque la tension aux bornes du demi-bras supérieur (24u) dudit au moins un bras atteint la tension maximale pouvant être générée par la chaine de sous-modules dudit demi-bras supérieur.

14. Procédé de contrôle d'un convertisseur (10) permettant de convertir une première tension continue en une seconde tension continue et inversement, le convertisseur comportant :

   - des premier et second terminaux continus (16,18) configurés pour être reliés électriquement à un premier réseau d'alimentation électrique continu ;
   - des troisième et quatrième terminaux continus (20,22) configurés pour être reliés électriquement à un second réseau d'alimentation électrique continu;
   - au moins un bras (24) connectés entre le premier terminal continu et le deuxième terminal continu, ledit au moins un bras comportant un demi-bras supérieur (24u) et un demi-bras inférieur (24l) reliés électriquement l'un à l'autre en un point milieu, chaque demi-bras comprenant une chaine de sous-modules (30) comportant une pluralité de sous-modules (SM) commandables individuellement par un organe de commande propre à chaque sous-module et chaque sous-module comprenant un condensateur, l'organe de commande de chaque sous-module pouvant prendre au moins un premier état dans lequel le condensateur est inséré dans la chaine de sous-modules et un deuxième état dans lequel le condensateur n'est pas inséré dans ladite chaine de sous-modules, chaque chaine de sous-modules pouvant être modélisée par une source de tension apte à générer une tension à ses bornes dépendant d'un nombre de condensateurs mis en série dans ladite chaine de sous-modules, chaque demi-bras comprenant une inductance (32) connectée en série avec la chaine de sous-modules dudit demi-bras ;
- un module de filtrage (34) reliant électriquement ledit point milieux dudit au moins un bras au troisième terminal continu, ledit module de filtrage étant configuré pour limiter la circulation d'un courant électrique alternatif vers ledit troisième terminal continu ; et
- au moins un dispositif coupe-circuit (40) connecté entre le point milieu dudit au moins un bras et le premier terminal continu, ledit dispositif coupe-circuit pouvant prendre une position ouverte et une position fermée, ledit dispositif coupe-circuit étant configuré pour s'ouvrir lorsque la tension aux bornes du demi-bras supérieur atteint la tension maximale pouvant être générée par la chaine de sous-modules dudit demi-bras supérieur.

15. Procédé de contrôle selon la revendication **14,** comprenant en outre, en cas de chute de la tension entre les troisième et quatrième terminaux continus (20,22), les étapes selon lesquelles :

- on place les organes de commande de la chaine de sous-modules (30) du demi-bras inférieur (24l) dudit au moins un bras dans le premier état, de manière à insérer les condensateurs de ladite chaine de sous-modules du demi-bras inférieur en série dans ladite chaine de sous-modules ; puis
- on place ledit au moins un dispositif coupe-circuit (40) en position ouverte afin d'interrompre la circulation d'un courant dans ledit demi-bras supérieur dudit au moins un bras.

16. Procédé de contrôle selon la revendication 15, dans lequel les organes de commande des sous-modules (SM) des chaines de sous-modules (30) peuvent prendre en outre un état non commandé, le procédé comprenant en outre une étape selon laquelle, avant de placer les organes de commande de la chaine de sous-modules du demi-bras inférieur (24l) dudit au moins un bras (24) dans le premier état, on place les organes de commande des sous-modules de la chaine de sous-modules du demi-bras supérieur dudit au moins un bras dans l'état non-commandé.

17. Procédé de contrôle selon la revendication **15 ou 16,** comprenant en outre une étape selon laquelle, après avoir placé l'ensemble des organes de commande de ladite chaine de sous-modules du demi-bras inférieur (24l) dudit au moins un bras dans le premier état et avant de placer le dispositif coupe-circuit (40) en position ouverte, on commande les organes de commande de ladite chaine de sous-modules dudit demi-bras inférieur de manière à générer une tension dans ledit demi-bras inférieur permettant de maintenir un courant sensiblement nul dans ledit demi-bras supérieur.

**Patentansprüche**

1. Spannungswandler (10), der das Umwandeln einer ersten Gleichspannung in eine zweite Gleichspannung und umgekehrt ermöglicht, wobei der Wandler beinhaltet:

- einen ersten und einen zweiten Gleichstromanschluss (16, 18), die dazu ausgestaltet sind, elektrisch mit einem ersten Gleichstromversorgungsnetz (12) verbunden zu sein,
- einen dritten und einen vierten Gleichstromanschluss (20, 22), die dazu ausgestaltet sind, elektrisch mit einem zweiten Gleichstromversorgungsnetz (14) verbunden zu sein,
- mindestens einen Arm (24), der sich zwischen dem ersten Gleichstromanschluss und dem zweiten Gleichstromanschluss erstreckt, wobei der mindestens eine Arm einen oberen Halb-Arm (24u) und einen unteren Halb-Arm (24l) beinhaltet, die an einem Mittelpunkt (25) elektrisch miteinander verbunden sind, wobei jeder Halb-Arm eine Kette von Untermodulen (30) umfasst, die mehrere Untermodule (SM) beinhaltet, die durch ein jedem Untermodul eigenes Steuerglied (T1,T2) einzeln steuerbar sind, und jedes Untermodul einen Kondensator umfasst, wobei das Steuerglied jedes Untermoduls mindestens einen ersten Zustand, in dem der Kondensator in die Kette von Untermodulen eingegeben wird, und einen zweiten Zustand einnehmen kann, in dem der Kondensator nicht in die Kette von Untermodulen eingegeben wird, wobei jede Kette von Untermodulen durch eine Spannungsquelle modelliert werden kann, die dazu geeignet ist, eine Spannung an ihren Klemmen zu erzeugen, die von einer Anzahl von Kondensatoren abhängt, welche in der Kette von Untermodulen in Reihe geschaltet sind, wobei jeder Halb-Arm eine Induktanz (32) umfasst, die in Reihe mit der Kette von Untermodulen des Halb-Arms geschaltet ist,
- ein Filtermodul (34), das den Mittelpunkt des mindestens einen Arms mit dem dritten Gleichstromanschluss elektrisch verbindet, wobei das Filtermodul dazu ausgestaltet ist, die Zirkulation eines elektrischen Wechselstroms zu dem dritten Gleichstromanschluss hin zu begrenzen,

**dadurch gekennzeichnet, dass** er umfasst

- mindestens eine Unterbrechungsvorrichtung (40), die zwischen dem Mittelpunkt des mindestens einen Arms und dem ersten Gleichstromanschluss angeschlossen ist, wobei die Unterbrechungsvorrichtung eine offene Position und eine geschlossene Position einnehmen kann, wobei die Unterbrechungsvorrichtung dazu ausgestaltet ist, sich zu öffnen, wenn die Spannung auf den Klemmen des oberen Halb-Arms des mindestens einen Arms die Höchstspannung erreicht, welche durch die Kette von Untermodulen des oberen Arms erzeugt werden kann.

2. Spannungswandler nach Anspruch 1, wobei die Höchstspannung, die durch die Kette von Untermodulen (30) des oberen Halb-Arms (24u) des mindestens einen Arms erzeugt werden kann, geringer als die Spannung zwischen dem ersten und dem zweiten Gleichstromanschluss (26,28) ist, wenn der erste und der zweite Gleichstromanschluss an ein erstes Gleichstromversorgungsnetz (12) angeschlossen sind.

3. Spannungswandler nach Anspruch 1 oder 2, wobei die mindestens eine Unterbrechungsvorrichtung (40) zwischen dem ersten Gleichstromanschluss und der Kette von Untermodulen des oberen Halb-Arms (24u) des mindestens einen Arms (24) angeschlossen ist.

4. Spannungswandler nach einem der Ansprüche 1 und 3, umfassend mehrere Arme (24, 26, 28), die zwischen dem ersten Gleichstromanschluss (26) und dem zweiten Gleichstromanschluss (28) angeschlossen sind, wobei jeder Arm einen oberen Halb-Arm (24u, 26u, 28u) und einen unteren Halb-Arm (24l, 26l, 28l) beinhaltet, die an einem Mittelpunkt (25, 27, 29) miteinander verbunden sind, wobei jeder Halb-Arm eine Kette von Untermodulen (30) und eine Induktanz (32) umfasst, die mit der Kette von Untermodulen des Halb-Arms in Reihe geschaltet ist.

5. Spannungswandler nach Anspruch 4, wobei die Anordnung der oberen Halb-Arme (24u, 26u, 28u) an einem oberen Punkt (31) miteinander elektrisch verbunden ist und wobei die mindestens eine Unterbrechungsvorrichtung (40) zwischen dem oberen Punkt und dem ersten Gleichstromanschluss (16) angeschlossen ist.

6. Spannungswandler nach Anspruch 4, wobei die Anordnung der oberen Halb-Arme (24u,26u,28u) an einem oberen Punkt (31) miteinander verbunden ist und wobei die mindestens eine Unterbrechungsvorrichtung (40) in dem oberen Halb-Arm eines Arms zwischen dem oberen Punkt und dem Mittelpunkt des einen Arms (25, 27, 29) in Reihe geschaltet ist.

7. Spannungswandler nach Anspruch 6, **dadurch gekennzeichnet, dass** er mehrere Unterbrechungsvorrichtungen (40, 40', 40") umfasst, wobei jede der Unterbrechungsvorrichtungen in einem oberen Halb-Arm (24u, 26u, 28u) eines der Arme (24, 26, 28) des Wandlers (10) zwischen dem oberen Punkt (31) und dem Mittelpunkt (25, 27, 29) des entsprechenden Arms in Reihe geschaltet ist.

8. Spannungswandler nach einem der Ansprüche 1 bis 7, wobei die mindestens eine Unterbrechungsvorrichtung (40) dazu geeignet ist, einer Spannung mindestens gleich der Nennspannung eines ersten Gleichstromversorgungsnetzes (12) standzuhalten, wenn ein solches erstes Gleichstromversorgungsnetz mit dem ersten und dem zweiten Gleichstromanschluss (16, 18) des Wandlers verbunden ist.

9. Spannungswandler nach einem der Ansprüche 1 bis 8, wobei die mindestens eine Unterbrechungsvorrichtung (40) derart dazu ausgestaltet ist, dass die Umschaltzeit zum Wechsel von seiner geschlossenen Position in seine offene Position die Größenordnung von einigen Millisekunden, vorzugsweise weniger als 10 Millisekunden, aufweist.

10. Spannungswandler nach einem der Ansprüche 1 bis 9, wobei die mindestens eine Unterbrechungsvorrichtung (40) mindestens einen mechanischen Schalter zum Trennen von Kontakten umfasst.

11. Spannungswandler nach einem der Ansprüche 1 bis 10, wobei die Unterbrechungsvorrichtung (40) mindestens ein Haltleiterbauelement umfasst.

12. Spannungswandler nach einem der Ansprüche 1 bis 11, wobei das Filtermodul (34) mindestens eine Induktanz umfasst, die zwischen dem Mittelpunkt (25) des mindestens einen Arms (24) und dem dritten Gleichstromanschluss (20) angeschlossen ist.

13. Spannungswandler nach einem der Ansprüche 1 bis 12, ferner umfassend ein Steuermodul, das dazu ausgestaltet ist, die Öffnung der Unterbrechungsvorrichtung (40) zu steuern, wenn die Spannung an den Klemmen des oberen Halb-Arms (24u) des mindestens einen Arms die Höchstspannung erreicht, welche durch die Kette von Untermodulen des oberen Halb-Arms erzeugt wird.

14. Verfahren zur Steuerung eines Wandlers (10), welches das Umwandeln einer ersten Gleichspannung in eine zweite Gleichspannung und umgekehrt ermöglicht, wobei der Wandler beinhaltet:

   - einen ersten und einen zweiten Gleichstromanschluss (16, 18), die dazu ausgestaltet sind, elektrisch mit einem ersten Gleichstromversorgungsnetz verbunden zu sein,
   - einen dritten und einen vierten Gleichstromanschluss (20, 22), die dazu ausgestaltet sind, elektrisch mit einem zweiten Gleichstromversorgungsnetz verbunden zu sein,
   - mindestens einen Arm (24), der zwischen dem ersten Gleichstromanschluss und dem zweiten Gleichstromanschluss angeschlossen ist, wobei der mindestens eine Arm einen oberen Halb-Arm (24u) und einen unteren Halb-Arm (24l) aufweist, die an einem Mittelpunkt elektrisch miteinander verbunden sind, wobei jeder Halb-Arm eine Kette von Untermodulen (30) umfasst, die mehrere Untermodule (SM) beinhaltet, die durch ein jedem Untermodul eigenes Steuerglied einzeln steuerbar sind, und jedes Untermodul einen Kondensator umfasst, wobei das Steuerglied jedes Untermoduls mindestens einen ersten Zustand, in dem der Kondensator in die Kette von Untermodulen eingegeben wird, und einen zweiten Zustand einnehmen kann, in dem der Kondensator nicht in die Kette von Untermodulen eingegeben wird, wobei jede Kette von Untermodulen durch eine Spannungsquelle modelliert werden kann, die dazu geeignet ist, eine Spannung an ihren Klemmen zu erzeugen, die von einer Anzahl von Kondensatoren abhängt, welche in der Kette von Untermodulen in Reihe geschaltet sind, wobei jeder Halb-Arm eine Induktanz (32) umfasst, die in Reihe mit der Kette von Untermodulen des Halb-Arms geschaltet ist,
   - ein Filtermodul (34), das den Mittelpunkt des mindestens einen Arms mit dem dritten Gleichstromanschluss elektrisch verbindet, wobei das Filtermodul dazu ausgestaltet ist, die Zirkulation eines elektrischen Wechselstroms zu dem dritten Gleichstromanschluss hin zu begrenzen, und
   - mindestens eine Unterbrechungsvorrichtung (40), die zwischen dem Mittelpunkt des mindestens einen Arms und dem ersten Gleichstromanschluss angeschlossen ist, wobei die Unterbrechungsvorrichtung eine offene Position und eine geschlossene Position einnehmen kann, wobei die Unterbrechungsvorrichtung dazu ausgestaltet ist, sich zu öffnen, wenn die Spannung auf den Klemmen des oberen Halb-Arms die Höchstspannung erreicht, welche durch die Kette von Untermodulen des oberen Arms erzeugt werden kann.

15. Verfahren zur Steuerung nach Anspruch 14, ferner umfassend, bei einem Spannungsabfall zwischen dem dritten und dem vierten Gleichstromanschluss (20, 22) die Schritte, gemäß denen:

   - Stellglieder der Kette von Untermodulen (30) des unteren Halb-Arms (24l) des mindestens einen Arms derart in einen ersten Zustand versetzt werden, dass die Kondensatoren der Kette von Untermodulen des unteren Halb-Arms in Reihe in die Kette von Untermodulen eingegeben werden, anschließend
   - die mindestens eine Unterbrechungsvorrichtung (40) in eine offene Position verbracht wird, um die Zirkulation eines Stroms in dem oberen Halb-Arm des mindestens einen Arms zu unterbrechen.

16. Verfahren zur Steuerung nach Anspruch 15, wobei die Stellglieder der Untermodule (SM) der Ketten von Untermodulen (30) ferner einen nicht gesteuerten Zustand einnehmen können, wobei das Verfahren ferner einen Schritt umfasst, gemäß dem vor dem Verbringen der Stellglieder der Kette von Untermodulen des unteren Halb-Arms (24l) des mindestens einen Arms (24) in den ersten Zustand die Stellglieder der Untermodule der Kette von Untermodulen des oberen Halb-Arms des mindestens einen Arms in den nicht gesteuerten Zustand verbracht werden.

17. Verfahren zur Steuerung nach Anspruch 15 oder 16, ferner umfassend einen Schritt, gemäß dem nach dem Verbringen der Anordnung der Stellglieder der Kette von Untermodulen des unteren Halb-Arms (24l) des mindestens einen Arms in den ersten Zustand und vor dem Verbringen der Unterbrechungsvorrichtung (40) in die offene Position die Stellglieder der Kette von Untermodulen des unteren Halb-Arms derart gesteuert werden, dass eine Spannung in dem unteren Halb-Arm erzeugt wird, welche das Aufrechterhalten eines Strom von im Wesentlichen null in dem oberen Halb-Arm ermöglicht.

## EP 4 078 755 B1

**Claims**

1. A voltage converter (10) for converting a first DC voltage into a second DC voltage and vice versa, the converter including:

   - first and second DC terminals (16, 18) configured to be electrically connected to a first DC power supply network (12);
   - third and fourth DC terminals (20, 22) configured to be electrically connected to a second DC power supply network (14);
   - at least one leg (24) extending between the first DC terminal and the second DC terminal, said at least one leg including at least one upper arm (24u) and one lower arm (24l) electrically connected to each other at a midpoint (25), each arm comprising a chain of sub-modules (30) including a plurality of sub-modules (SM) individually controllable by a control member (T1, T2) specific to each sub-module and each sub-module comprising a capacitor, the control member of each sub-module being able to take at least a first state in which the capacitor is inserted into the chain of sub-modules and a second state in which the capacitor is not inserted into said chain of sub-modules, each chain of sub-modules being able to be modeled by a voltage source able to generate a voltage across it dependent on a number of capacitors placed in series in said chain of sub-modules, each arm comprising an inductance (32) connected in series with the chain of sub-modules of said arm;
   - a filter module (34) electrically connecting said midpoint of said at least one leg to the third DC terminal, said filter module being configured to limit the circulation of an AC electric current towards said third DC terminal;

   **characterized in that** it comprises:

   - at least one circuit breaker device (40) connected between the midpoint of said at least one leg and the first DC terminal, said circuit breaker device being able to take an open position and a closed position, said circuit breaker device being configured to open when the voltage across the upper arm of said at less than one leg reaches the maximum voltage that can be generated by the chain of sub-modules of said upper arm.

2. The voltage converter according to claim 1, wherein the maximum voltage that can be generated by said chain of sub-modules (30) of the upper arm (24u) of said at least one leg is lower than the voltage between the first and second DC terminals (26, 28) when said first and second DC terminals are connected to a first DC power supply network (12).

3. The voltage converter according to claim 1 or 2, wherein said at least one circuit breaker device (40) is connected between the first DC terminal and the chain of sub-modules of the upper arm (24u) of said at least one leg (24).

4. The voltage converter according to any one of claims 1 to 3, comprising a plurality of legs (24, 26, 28) connected between the first DC terminal (26) and the second DC terminal (28), each leg including an upper arm (24u, 26u, 28u) and a lower arm (24l, 26l, 28l) connected to each other at a midpoint (25, 27, 29), each arm comprising a chain of sub-modules (30) and an inductance (32) connected in series with the chain of sub-modules of said arm.

5. The voltage converter according to claim 4, wherein all of the upper arms (24u, 26u, 28u) are electrically connected to each other at an upper point (31) and wherein said at least one circuit breaker device (40) is connected between said upper point and the first DC terminal (16).

6. The voltage converter according to claim 4, wherein all of the upper arms (24u, 26u, 28u) are connected together at an upper point (31) and wherein said at least one circuit breaker device (40) is connected in series in the upper arm of one of the legs, between said upper point and the midpoint of said one leg (25, 27, 29).

7. The voltage converter according to claim 6, **characterized in that** it comprises a plurality of circuit breaker devices (40, 40', 40"), each of the circuit breaker devices being connected in series in an upper arm (24u, 26u, 28u) of one of the legs (24, 26, 28) of the converter (10) between said upper point (31) and the midpoint (25, 27, 29) of the corresponding leg.

8. The voltage converter according to any one of claims 1 to 7, wherein said at least one circuit breaker device (40) is able to withstand a voltage at least equal to the nominal voltage of a first DC power supply network (12), when such a first DC power supply network is connected to the first and second DC terminals (16, 18) of the converter.

17

9. The voltage converter according to any one of claims 1 to 8, wherein said at least one circuit breaker device (40) is configured so that the switching time to move from its closed position to its open position is of the order of a few milliseconds, preferably less than 10 milliseconds.

10. The voltage converter according to any one of claims 1 to 9, wherein said at least one circuit breaker device (40) comprises at least one switch by mechanical contact separation.

11. The voltage converter according to any one of claims 1 to 10, wherein the circuit breaker device (40) comprises at least one semiconductor component.

12. The voltage converter according to any one of claims 1 to 11, wherein the filter module (34) comprises at least one inductance connected between the midpoint (25) of said at least one leg (24) and the third DC terminal (20).

13. The voltage converter according to any one of claims 1 to 12, further comprising a monitoring module configured to control the opening of the circuit breaker device (40) when the voltage across the upper arm (24u) of said at least one leg reaches the maximum voltage that can be generated by the chain of sub-modules of said upper arm.

14. A method for monitoring a converter (10) making it possible to convert a first DC voltage into a second DC voltage and vice versa, the converter including:

    - first and second DC terminals (16, 18) configured to be electrically connected to a first DC power supply network;
    - third and fourth DC terminals (20, 22) configured to be electrically connected to a second DC power supply network;
    - at least one leg (24) connected between the first DC terminal and the second DC terminal, said at least one leg including an upper arm (24u) and a lower arm (24l) electrically connected to each other at a midpoint, each arm comprising a chain of sub-modules (30) including a plurality of sub-modules (SM) individually controllable by a control member specific to each sub-module and each sub-module comprising a capacitor, the control member of each sub-module being able to take at least a first state in which the capacitor is inserted into the chain of sub-modules and a second state in which the capacitor is not inserted into said chain of sub-modules modules, each chain of sub-modules being able to be modeled by a voltage source able to generate a voltage across it dependent on a number of capacitors placed in series in said chain of sub-modules, each arm comprising an inductance (32) connected in series with the chain of sub-modules of said arm;
    - a filter module (34) electrically connecting said midpoint of said at least one leg to the third DC terminal, said filter module being configured to limit the circulation of an AC electric current towards said third DC terminal; and
    - at least one circuit breaker device (40) connected between the midpoint of said at least one leg and the first DC terminal, said circuit breaker device being able to take an open position and a closed position, said circuit breaker device being configured to open when the voltage across the upper arm reaches the maximum voltage that can be generated by the chain of sub-modules of said upper arm.

15. The monitoring method according to claim 14, further comprising, in the event of a drop in the voltage between the third and fourth DC terminals (20, 22), the steps according to which:

    - the control members of the chain of sub-modules (30) of the lower arm (24l) of said at least one leg are placed in the first state, so as to insert the capacitors of said chain of sub-modules of the lower arm in series into said chain of sub-modules; then
    - said at least one circuit breaker device (40) is placed in the open position in order to interrupt the circulation of a current in said upper arm of said at least one leg.

16. The monitoring method according to claim 15, wherein the control members of the sub-modules (SM) of the chains of sub-modules (30) can also take a non-controlled state, the method further comprising a step according to which, before placing the control members of the chain of sub-modules of the lower arm (24l) of said at least one leg (24) in the first state, the control members of the sub-modules of the chain of sub-modules of the upper arm of said at least one leg are placed in the non-controlled state.

17. The monitoring method according to claim 15 or 16, further comprising a step according to which, after having placed all of the control members of said chain of sub-modules of the lower arm (24l) of said at least one leg in the first state and before placing the circuit breaker device (40) in the open position, the control members of said chain of sub-modules of said lower arm are controlled so as to generate a voltage in said lower arm making it possible to maintain a substantially zero current in said upper arm.

[Fig. 1]

[Fig. 2]

[Fig. 3A-3D]

[Fig. 4]

[Fig. 5]

[Fig. 6]

[Fig. 7]

**EP 4 078 755 B1**

**RÉFÉRENCES CITÉES DANS LA DESCRIPTION**

**Documents brevets cités dans la description**

- CN 108233340 A
- CN 109713898 A
- WO 2014169388 A1